(19) Europäisches Patentamt
European Patent Office
Office européen des brevets

(11) EP 3 007 300 A1

(12) EUROPEAN PATENT APPLICATION

(43) Date of publication:
13.04.2016 Bulletin 2016/15

(51) Int Cl.:
H02J 3/36 (2006.01)

(21) Application number: 14382388.8

(22) Date of filing: 10.10.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: ALSTOM Technology Ltd
5400 Baden (CH)

(72) Inventors:
• Hassan, Fainan Anmed Abdul Maguid
Mohammed
Lichfield
Staffordshire
WS14 9GR (GB)

• Sau Bassols, Joan
17860 Sant Joan de les Abadesses
Girona (ES)
• Prieto Araujo, Eduardo
08330 Premià de Mar
Barcelona (ES)
• Gomis Bellmunt, Oriol
08006 Barcelona (ES)

(74) Representative: Potter Clarkson LLP
The Belgrave Centre
Talbot Street
Nottingham NG1 5GG (GB)

(54) **Current flow controller**

(57)      A current flow controller (30) comprises:
first, second and third terminals (32,34,36) being connectable, in use, to first, second and third electrical elements (46) respectively, the third terminal (36) being electrically connected to each of the first and second terminals (32,34);
a bidirectional switch (38) being operatively connected between the first and third terminals (32,36), the bidirectional switch (38) being switchable to selectively permit and block current flow between the first and third terminals (32,36), the bidirectional switch (38) including a pair of inverse-parallel connected first and second switching elements $(q_1,q_2,q_3,q_4)$, each switching element $(q_1,q_2,q_3,q_4)$ being configured to have reverse voltage blocking capability;
an energy storage device (42) being fixedly connected between the first and second terminals (32,34) to define a fixed current path between the first and second terminals (32,34), the energy storage device (42) providing a voltage source; and
a control unit (44) configured to selectively control switching of the bidirectional switch (38) in a voltage drop injection mode to block current flow in the bidirectional switch (38) in order to inject a voltage drop, in use, into the first electrical element (46) and thereby direct current through the fixed current path between the first and second terminals (32,34) so as to carry out regulation of current flow in at least one of the electrical elements (46).

Figure 1

## Description

This invention relates to a current flow controller and a current flow control circuit, and, in particular, to a current flow controller and a current flow control circuit for use in high voltage direct current (HVDC) power transmission.

A DC electrical network may include a power source that is connected to a load via one or more current-carrying conductors, or multiple power sources that are connected to multiple loads using a network of current-carrying conductors.

An example of a DC electrical network is a DC power grid that requires multi-terminal interconnection of HVDC converters, whereby power can be exchanged on the DC side using two or more HVDC converters electrically connected together. Each HVDC converter acts as either a source or sink to maintain the overall input-to-output power balance of the DC power grid whilst exchanging the power as required. The DC power grid relies on a network of DC power transmission lines or cables to achieve multi-terminal interconnection of the HVDC converters.

According to a first aspect of the invention, there is provided a current flow controller comprising:

first, second and third terminals being connectable, in use, to first, second and third electrical elements respectively, the third terminal being electrically connected to each of the first and second terminals;
a bidirectional switch being operatively connected between the first and third terminals, the bidirectional switch being switchable to selectively permit and block current flow between the first and third terminals, the bidirectional switch including a pair of inverse-parallel connected first and second switching elements, each switching element being configured to have reverse voltage blocking capability;
an energy storage device being fixedly connected between the first and second terminals to define a fixed current path between the first and second terminals, the energy storage device providing a voltage source; and
a control unit configured to selectively control switching of the bidirectional switch in a voltage drop injection mode to block current flow in the bidirectional switch in order to inject a voltage drop, in use, into the first electrical element and thereby direct current through the fixed current path between the first and second terminals so as to carry out regulation of current flow in at least one of the electrical elements.

It will be understood that the fixed connection of the energy storage device between the first and second terminals is intended to mean that the energy storage device stays electrically connected between the first and second terminals and thereby is not switchable out of circuit between the first and second terminals.

The provision of the energy storage device fixedly connected between the first and second terminals therefore obviates any switching of the energy storage device into and out of circuit between the first and second terminals, thus reducing the number of switches required for the current flow controller to perform its function.

The inclusion of at least one voltage source in the current flow controller permits injection of a voltage drop into the first electrical element. The injection of a voltage drop into an electrical element creates either a positive resistance effect in which the voltage drop opposes and thereby reduces the current flow in that electrical element, or a negative resistance effect in which the voltage drop contributes to an increase of the current flow in that electrical element.

The ability to selectively inject a voltage drop into the first electrical element permits regulation of current flow in at least one of the electrical elements in order to achieve a target current flow in the at least one of the electrical elements. For example, regulation of current flow in at least one of the electrical elements may be selected from a group of functions including, but is not limited to:

- increasing or decreasing current flow in at least one of the electrical elements;
- balancing the current flows in two or more of the electrical elements;
- limiting a current flow in at least one of the electrical elements below a predefined current limit;
- reducing current flow in at least one of the electrical elements to zero or substantially zero.

The configuration of the bidirectional switch, namely the inverse-parallel connection of the first and second switching elements that are configured to have reverse voltage blocking capability, enables the operation of the current flow controller to carry out regulation of current flow in at least one of the electrical elements even when current reversal occurs in one or more of the electrical elements. This not only increases the reliability of the current flow controller, but also obviates the need to physically alter the connections of the current flow controller to the electrical elements in order to enable regulation of current flow in at least one of the electrical elements.

In addition the configuration of the components of the current flow controller according to the invention, as set out above, results in a smaller, simpler and more cost-effective current flow controller that requires a minimum number of switches.

The current flow controller according to the invention therefore permits dynamic, selective control over current flow in at least one of the electrical elements through injection of the voltage drop. Such control over current flow in at least one of the electrical elements is advantageous in that current flow in at least one of the electrical elements may be controlled within a specific operating range to improve its or their performance.

Moreover the use of the current flow controller results in an energy-efficient manner of regulating the current flow in at least one of the electrical elements. This is because the regulation of current flows in at least one of the electrical elements involves transferring energy that is removed from one electrical element to another electrical element. This thereby obviates the need for additional energy sources to add energy into an electrical element and the need for additional energy sinks such as storage capacitors or dissipation resistors to store or dissipate energy that is removed from an electrical element, when increasing or decreasing current flow in the electrical element. The use of additional energy sources and sinks would add significant cost, size and weight to the plurality of electrical elements. Moreover, the use of dissipation resistors would not only increase dissipation losses in the current flow controller, but also might require the use of a cooling system, which would increase the overall complexity of the current flow controller.

The manner in which the voltage drop is injected into the electrical element means that the energy storage device may only be required to have a low voltage rating, rather than a voltage rating corresponding to the voltage between the electrical element and ground.

The use of the current flow controller in regulating current flow in at least one of the electrical elements may be carried out independently of the operation of the electrical elements. This removes the need to redesign the control procedure for the electrical elements in order to accommodate a need for regulation of current flow in at least one of the electrical elements.

In embodiments of the invention, the control unit may be configured to selectively control switching of the bidirectional switch in an energy storage device bypass mode to permit current flow between the first and third terminals. This allows a current to flow directly between the first and third terminals whilst bypassing the energy storage device, and thereby results in a configuration of the current flow controller in which the energy storage device is inhibited from carrying out regulation of current flow in at least one of the electrical elements. Such a configuration of the current flow controller is useful under circumstances in which the current flow in each electrical element is at a normal operating current level or within a normal operating current range, thus obviating the need for regulation of current flow in at least one of the electrical elements in those circumstances.

In further embodiments of the invention, the current flow controller may include first and second bidirectional switches, the first bidirectional switch being operatively connected between the first and third terminals, the second bidirectional switch being operatively connected between the second and third terminals, each bidirectional switch being switchable to selectively permit and block current flow between the third terminal and the corresponding one of the first and second terminals, each bidirectional switch including a pair of inverse-parallel connected first and second switching elements, each switching element being configured to have reverse voltage blocking capability. The control unit may be configured to selectively control switching of the bidirectional switches in the voltage drop injection mode to block current flow in one of the bidirectional switches and permit current flow in the other of the bidirectional switches in order to inject a voltage drop, in use, into one of the first and second electrical elements and thereby direct current through the fixed current path between the first and second terminals so as to carry out regulation of current flow in at least one of the electrical elements.

The inclusion of the first and second bidirectional switches in the current flow controller permits injection of a voltage drop into either of the first and second electrical elements. The inclusion of the first and second bidirectional switches in the current flow controller therefore increases the number of configurations of the current flow controller that allows it to perform the abovementioned current direction and current flow regulation operations, thus enhancing the reliability of the current flow controller.

The control unit may be configured to selectively control switching of the bidirectional switches in the voltage drop injection mode to alternate between first and second switched states of the bidirectional switches in order to alternately inject a voltage drop, in use, into each of the first and second electrical elements and thereby direct current through the fixed current path between the first and second terminals so as to carry out regulation of current flow in at least one of the electrical elements.

In the first switched state of the bidirectional switches, the first bidirectional switch permits current flow between the third terminal and the first terminal, and the second bidirectional switch blocks current flow between the third terminal and the second terminal. In the second switched state of the bidirectional switches, the first bidirectional switch blocks current flow between the third terminal and the first terminal, and the second bidirectional switch permits current flow between the third terminal and the second terminal.

The ability to alternately inject a voltage drop, in use, into each of the first and second electrical elements in the manner set out above permits dynamic regulation of current flow in at least one of the electrical elements. The duty cycle of each voltage drop injection may vary depending on the requirements of the associated current flow regulation operation.

In still further embodiments of the invention, the control unit may be configured to selectively control switching of the bidirectional switches in an energy storage device bypass mode to permit current flow between the third terminal and each of the first and second terminals. This allows a respective current to flow directly between the third terminal and each of the first and second terminals whilst bypassing the energy storage device, and thereby results in a configuration of the current flow controller in which the energy storage device is inhibited from carrying out regulation of current flow in at least one of the electrical elements.

The type of switching element used in the or each bidirectional switch may vary as long as each switching element is configured to have reverse voltage blocking capability. For example, each switching element may include:

- an active switching device connected in series with a passive current check element;
- a thyristor.

For the purposes of this specification, it is intended that a passive current check element is any passive device that permits current flow in only one direction, e.g. a diode.

The energy storage device may be, for example, a capacitor, a fuel cell, a battery or any other energy storage device capable of storing and releasing its electrical energy to provide a voltage source.

The current flow controller may further include a current detector unit configured to detect a respective current direction in each of the electrical elements. This provides the current flow controller with information on the current directions in the electrical elements and thereby enables the control unit to take into account such information when controlling the switching of the or each bidirectional switch.

According to a second aspect of the invention, there is provided a current flow control circuit comprising:

first, second and third electrical elements; and a current flow controller according to any preceding claim;
wherein the first, second and third electrical elements are respectively connected to the first, second and third terminals of the current flow controller.

It will be appreciated that each electrical element may be any electrical device capable of conducting current. For example, each electrical element may be a power transmission network component, such as a DC power transmission medium, preferably for use in HVDC power transmission.

A power transmission medium may be any medium that is capable of transmitting electrical power between two or more electrical apparatus. Such a medium may be, but is not limited to, a submarine DC power transmission cable, an overhead DC power transmission line or cable and an underground DC power transmission cable. Such an electrical apparatus may be, but is not limited to, a DC power source, a load, a DC terminal of a DC power grid, or a DC electrical network.

The current flow controller and the current flow control circuit according to the invention are applicable to low-voltage, medium-voltage and high-voltage applications that require transmission of power between three electrical elements.

The current flow controller and the current flow control circuit according to the invention are applicable to different electrical circuits having higher numbers and different topologies of electrical elements. Such an electrical circuit may be, but is not limited to, a mesh-connected DC power grid or a radial-connected DC power grid.

A preferred embodiment of the invention will now be described, by way of a non-limiting example, with reference to the accompanying drawings in which:

Figure 1 shows schematically a current flow controller according to an embodiment of the invention;
Figure 2 shows schematically a switching operation of the current flow controller of Figure 1;
Figure 3 shows schematically a layout of a DC power grid;
Figure 4 shows schematically a first configuration of the current flow controller of Figure 1 and the DC power grid of Figure 3;
Figures 5 to 8 illustrate switching operations and an equivalent model of the current flow controller with respect to the first configuration of Figure 3;
Figure 9 shows schematically a second configuration of the current flow controller of Figure 1 and the DC power grid of Figure 3 and illustrates switching operations and an equivalent model of the current flow controller with respect to the second configuration;
Figure 10 shows schematically a third configuration of the current flow controller of Figure 1 and the DC power grid of Figure 3 and illustrates switching operations and an equivalent model of the current flow controller with respect to the third configuration;
Figure 11 shows schematically a fourth configuration of the current flow controller of Figure 1 and the DC power grid of Figure 3;
Figure 12 illustrates a first set of operational conditions of the fourth configuration of Figure 11 when the current flow controller is operated in its energy storage device bypass mode;
Figures 13 to 16 illustrate the operation of the fourth configuration of Figure 11 to balance current flows in two DC power transmission lines of the DC power grid;
Figure 17 illustrates a second set of operational conditions of the fourth configuration of Figure 11 when the current flow controller is operated in its energy storage device bypass mode; and
Figures 18 to 21 illustrate the operation of the fourth configuration of Figure 11 to reduce a current in a DC power transmission line of the DC power grid to zero.

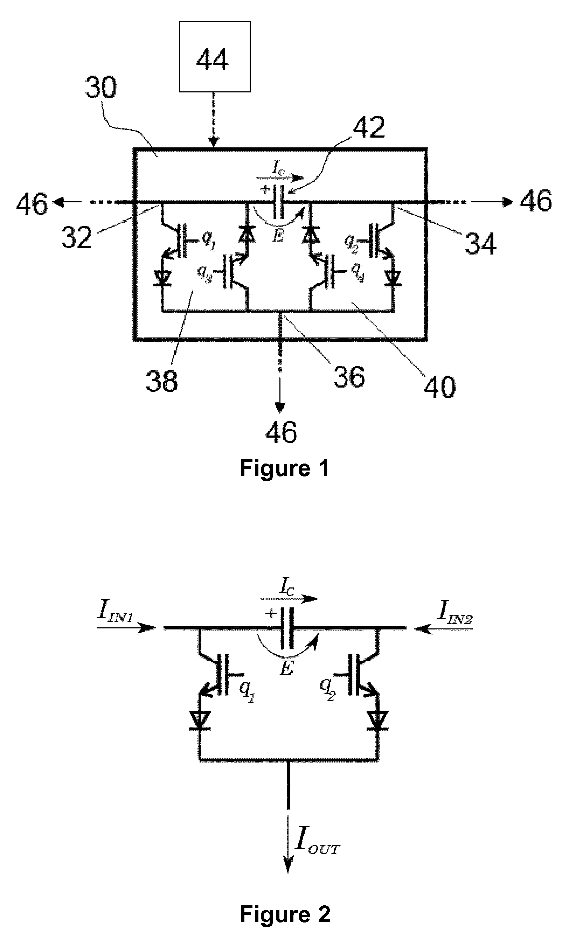

A current flow controller according to an embodiment of the invention is shown in Figure 1 and is designated generally by the reference numeral 30.

The current flow controller 30 comprises a plurality of terminals 32,34,36, first and second bidirectional switches 38,40, an energy storage device 42 and a control unit 44. The plurality of terminals 32,34,36 include first, second and third terminals 32,34,36 that are connectable, in use, to first, second and third electrical elements 46 respectively.

Each bidirectional switch 38,40 includes a pair of inverse-parallel connected first and second switching elements. Each switching element includes an active switching device in the form of an insulated gate bipolar transistor $q_1,q_2,q_3,q_4$ connected in series with a passive current check element in the form of a diode. In this manner each switching element is configured to have forward and reverse voltage blocking capabilities. The inverse-parallel connection of the first and second switching elements permits switching of each bidirectional switch 38,40 to selectively:

- permit current flow in a first current direction whilst blocking current flow in the opposite, second current direction; and
- block current flow in the first current direction whilst permitting current flow in the second current direction.

The third terminal 36 is electrically connected to each of the first and second terminals 32,34. More specifically, the first bidirectional switch 38 is operatively connected between the first and third terminals 32,36, and the second bidirectional switch 40 is operatively connected between the second and third terminals 34,36. Hence, each bidirectional switch 38,40 is switchable to selectively permit and block current flow between the third terminal 36 and the corresponding one of the first and second terminals 32,34.

In use, either the first or second switching element of each bidirectional switch 38,40 is switched to selectively permit and block current flow between the third terminal 36 and the corresponding one of the first and second terminals 32,34 to accommodate different directions of current flow in each of the plurality of electrical elements 46. For example, in Figure 2, current flows from the first electrical element 46 into the first terminal 32, current flows from the second electrical element 46 into the second terminal 34, and current flows out of the third terminal 36 into the third electrical element 46, and hence the appropriate switching element of each bidirectional switch 38,40 is switched to permit current flow from each of the first and second terminals 32,34 to the third terminal 36 via the respective switching element.

The energy storage device 42 is fixedly connected between the first and second terminals 32,34 to define a fixed current path between the first and second terminals 32,34. The energy storage device 42 is in the form of a capacitor and thereby provides a voltage source.

The control unit 44 is configured to selectively control switching of the bidirectional switches 38,40.

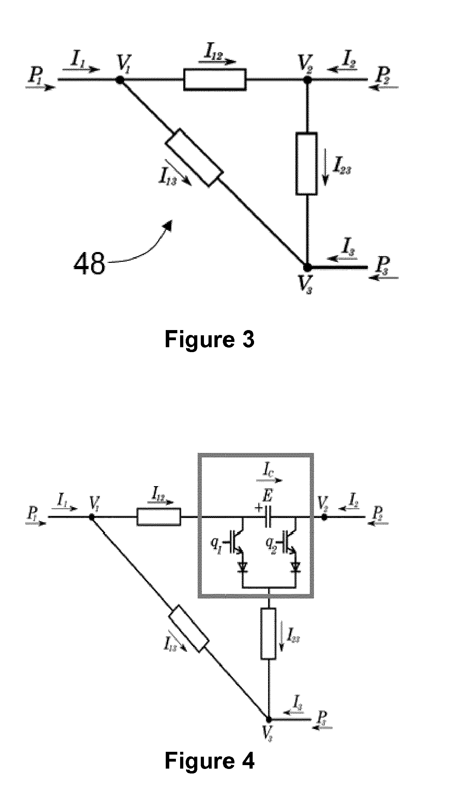

Figure 3 schematically shows a layout of a DC power grid 48.

The DC power grid 48 includes a plurality of grid nodes and a plurality of DC power transmission lines.

The plurality of grid nodes include first, second and third grid nodes, each of which is connected to a respective converter (not shown). The voltage at the first grid node is $V_1$, the voltage at the second grid node is $V_2$, and the voltage at the third grid node is $V_3$. Each converter is operable to inject power $P_1,P_2,P_3$ into or extract power $P_1,P_2,P_3$ from the DC power grid 48. The current flowing to/from the DC power grid from/to the corresponding converter at the first grid node is $I_1$, the current flowing to/from the DC power grid from/to the corresponding converter at the second grid node is $I_2$, and the current flowing to/from the DC power grid from/to the corresponding converter at the third grid node is $I_3$.

The plurality of DC power transmission lines includes a first DC power transmission line, a second DC power transmission line and a third DC power transmission line. The current flow in the first DC power transmission line is $I_{12}$, the current flow in the second DC power transmission line is $I_{23}$, and the current flow in the third DC power transmission line is $I_{13}$.

The current flows $I_{12},I_{23},I_{13}$ in each DC power transmission line is imposed by the respective voltage drop across each DC power transmission line.

The current flow controller 30 may be connected in the DC power grid 48 in different ways to form various configurations of the current flow controller 30 and the DC power grid 48.

A first configuration of the current flow controller 30 and the DC power grid 48 is shown in Figure 4. The first DC power transmission line interconnects the first grid node and the first terminal 32 of the current flow controller 30, the second DC power transmission line interconnects the third grid node and the third terminal 36 of the current flow controller 30, the third DC power transmission line interconnects the first and third grid nodes, and the second terminal 34 of the current flow controller 30 is directly connected to the second grid node.

As such the first terminal 32 of the current flow controller 30 is connected to a first electrical element 46 in the form of the first DC power transmission line, the second terminal 34 of the current flow controller 30 is connected to a second electrical element 46 in the form of the second grid node, and the third terminal 36 of the current flow controller 30 is connected to a third electrical element 46 in the form of the second DC power transmission line.

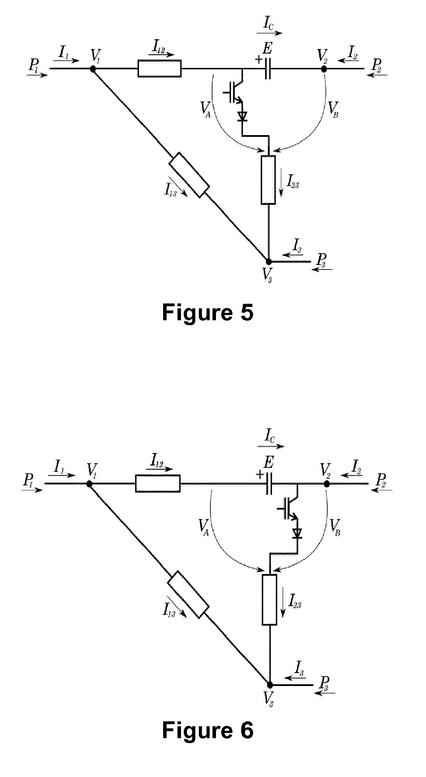

Exemplary operations of the current flow controller 30 of Figure 4 is described as follows, with reference to Figures 5 to 7.

As shown in Figure 5, the bidirectional switches 38,40 can be controlled in a voltage drop injection mode to switch to a first switched state so as to permit current flow from the first terminal 32 to the third terminal 36 and to block current flow between the second and third terminals 34,36. This results in a voltage drop, as provided by the energy storage device 42, being injected into the second grid node, and thereby results in current being directed through the fixed current path between the first and second terminals 32,34. When the bidirectional switches 38,40 are switched in the manner shown in Figure 5, the state of the current flow controller 30 can be characterised as follows:

$$V_A = 0$$

$$V_B = -\bar{E}$$

$$I_C = -I_2$$

$$t_{q1_{on}} = DT$$

where
$V_A$ is the voltage across the first bidirectional switch 38;
$V_B$ is the voltage across the second bidirectional switch 40;
E is the voltage level of the energy storage device 42;
$I_C$ is the current flowing through the fixed current path;
T is the switching period of the current flow controller 30;
D is the duty cycle of the first bidirectional switch 38;
$t_{q1on}$ is the on-time of the switching element of the first bidirectional switch 38.

As shown in Figure 6, the bidirectional switches 38,40 can be controlled in a voltage drop injection mode to switch to a second switched state so as to permit current flow from the second terminal 34 to the third terminal 36 and to block current flow between the first and third terminals 32,36. This results in a voltage drop, as provided by the energy storage device 42, being injected into the first DC power transmission line, and thereby results in current being directed through the fixed current path between the first and second terminals 32,34. When the bidirectional switches 38,40 are switched in the manner shown in Figure 6, the state of the current flow controller 30 can be characterised as follows:

$$V_A = \bar{E}$$

$$V_B = 0$$

$$I_C = I_{12}$$

$$t_{q2_{on}} = (1 - D)\mathrm{T}$$

where
$V_A$ is the voltage across the first bidirectional switch 38;
$V_B$ is the voltage across the second bidirectional switch 40;
E is the voltage level of the energy storage device 42;
$I_C$ is the current flowing through the fixed current path;
T is the switching period of the current flow controller 30;
D is the duty cycle of the first bidirectional switch 38;
$t_{q2on}$ is the on-time of the switching element of the second bidirectional switch 40.

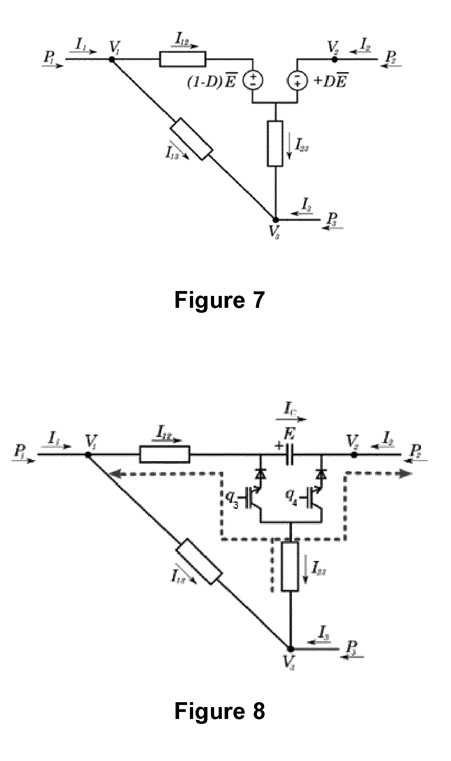

On the basis of the states of the current flow controller 30 shown in Figures 5 and 6, an equivalent model of the current flow controller 30 of Figure 4 was created in which the operation of the current flow controller 30 is represented by a first voltage source connected between the first and second DC power transmission lines and by a second voltage source connected between the second DC power transmission line and the second grid node. The first voltage source has a voltage level of $(1-D)\cdot\bar{E}$, while the second voltage source has a voltage level of $D\cdot\bar{E}$. Figure 7 shows schematically the equivalent model.

The injection of a voltage drop into an electrical element 46 creates either a positive resistance effect in which the voltage drop opposes and thereby reduces the current flow in that electrical element 46, or a negative resistance effect in which the voltage drop contributes to an increase of the current flow in that electrical element 46. As such the injection of the voltage drop into the second grid node or first DC power transmission line enables modification of the current flows in the DC power grid 48 and thereby permits regulation of current flow in at least one of the electrical elements 46 to be carried out. Such regulation of current flow is advantageous in that it does not affect the power $P_1, P_2, P_3$ injected into or extracted from the DC power grid 48 by each converter connected to the respective grid node.

The regulation of current flow in at least one of the electrical elements 46 may be selected from a group of functions including:

- increasing or decreasing current flow in at least one of the electrical elements 46;
- balancing the current flows in two or more of the electrical elements 46;
- limiting a current flow in at least one of the electrical elements 46 below a predefined current limit;
- reducing current flow in at least one of the electrical elements 46 to zero or substantially zero.

Current flow regulation may be required when the current flow in at least one electrical element 46 deviates from a normal operating current level or range. For example, a fault in the DC power grid 48 may lead to a fault current flowing in the DC power grid 48, or one of the DC power transmission lines may carry a higher or lower current $I_{12}, I_{23}, I_{13}$ than one other of the DC power transmission lines due to a variation in conductor impedance between the DC power transmission lines.

By setting an appropriate value for the duty cycle D, the bidirectional switches 38,40 can be controlled in the voltage drop injection mode to alternate between the first and second switched states of the bidirectional switches 38,40 in order to alternately inject a voltage drop, in use, into each of the first and second electrical elements 46 (in this case, each of the first DC power transmission line and second grid node) and thereby direct current through the fixed current path between the first and second terminals 32,34 so as to carry out regulation of current flow in at least one of the electrical elements 46.

If regulation of current flows in the electrical elements 46 is not required, the bidirectional switches 38,40 can be switched in an energy storage device bypass mode to permit current flow between the third terminal 36 and each of the first and second terminals 32,34. This allows a current to flow directly between the third terminal 36 and each of the first and second terminals 32,34 whilst bypassing the energy storage device 42, and thereby results in a configuration of the current flow controller 30 in which the energy storage device 42 is inhibited from carrying out regulation of current flow in at least one of the electrical elements 46. Such a configuration of the current flow controller 30 is useful under circumstances in which the current flow in each electrical element 46 is at a normal operating current level or within a normal operating current range, thus obviating the need for regulation of current flow in at least one of the electrical elements 46 in those circumstances.

As mentioned earlier, in use, either the first or second switching element of each bidirectional switch 38,40 is switched to selectively permit and block current flow between the third terminal 36 and the corresponding one of the first and second terminals 32,34 to accommodate different directions of current flow in each of the plurality of electrical elements 46. As such, as shown in Figure 8, the bidirectional switches 38,40 can be controlled in an energy storage device bypass mode so as to permit current flow from the third terminal 36 to the respective one of the first and second terminals 32,34, can be controlled in a voltage drop injection mode to switch to a first switched state to permit current flow from the third terminal 36 to the first terminal 32 and to block current flow between the second and third terminals 34,36, and can be controlled in a voltage drop injection mode to switch to a second switched state to permit current flow from the third terminal 36 to the second terminal 34 and to block current flow between the first and third terminals 32,36.

It will be appreciated that the current flow regulation operations of the current flow controller 30 described above with reference to Figures 5 and 6 applies mutatis mutandis to the current flow regulation operations of the current flow controller 30 configured in the manner set out in Figure 8.

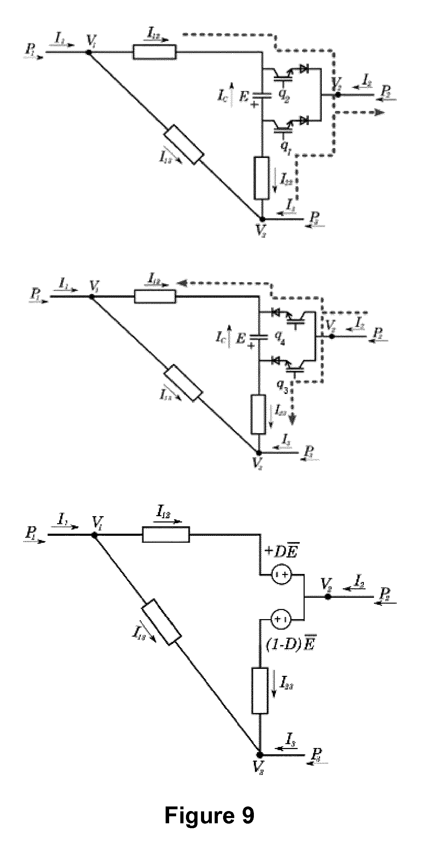

A second configuration of the current flow controller 30 and the DC power grid 48 is shown in Figure 9. The first DC power transmission line interconnects the first grid node and the second terminal 34 of the current flow controller 30, the second DC power transmission line interconnects the third grid node and the first terminal 32 of the current flow controller 30, the third DC power transmission line interconnects the first and third grid nodes, and the third terminal 36 of the current flow controller 30 is directly connected to the second grid node.

Figure 9 further shows the switching of the bidirectional switches to accommodate different directions of current flow in each of the plurality of electrical elements 46. More specifically, the bidirectional switches can be controlled in an energy storage device bypass mode so as to permit current flow to/from the third terminal 36 from/to the respective one of the first and second terminals 32,34, can be controlled in a voltage drop injection mode to switch to a first switched state to permit current flow to/from the third terminal 36 from/to the first terminal 32 and to block current flow between the second and third terminals 34,36, and can be controlled in a voltage drop injection mode to switch to a second switched state to permit current flow to/from the third terminal 36 to/from the second terminal 34 and to block current flow between the first and third terminals 32,36.

Figure 9 further shows an equivalent model that was created on the basis of the states of the current flow controller 30 shown in the same figure. In the equivalent model shown in Figure 9, the current flow controller 30 is represented by a first voltage source connected between the second DC power transmission line and the second grid node and by a second voltage source connected between the first DC power transmission line and the second grid node. The first voltage source has a voltage level of $(1\text{-}D) \cdot \overline{E}$, while the second voltage source has a voltage level of $D \cdot \overline{E}$.

The current flow regulation operations of the current flow controller 30 described above with reference to Figures 5 and 6 applies mutatis mutandis to the current flow regulation operations of the current flow controller 30 configured in the manner set out in Figure 9. Hence a voltage drop, as provided by the energy storage device 42, can be injected into the first DC power transmission line or second DC power transmission line to enable modification of the current flows in the DC power grid 48 and thereby permit regulation of current flow in at least one of the electrical elements 46 to be carried out.

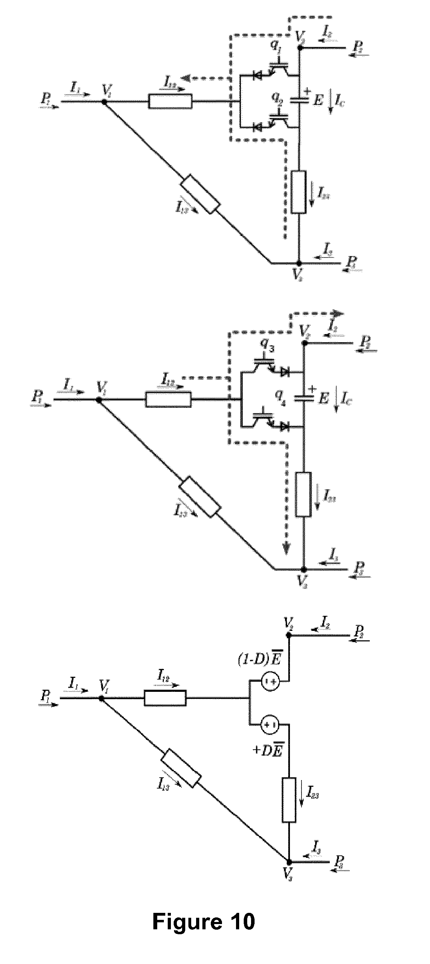

A third configuration of the current flow controller 30 and the DC power grid 48 is shown in Figure 10. The first DC power transmission line interconnects the first grid node and the third terminal 36 of the current flow controller 30, the second DC power transmission line interconnects the third grid node and the second terminal 34 of the current flow controller 30, the third DC power transmission line interconnects the first and third grid nodes, and the first terminal 32 of the current flow controller 30 is directly connected to the second grid node.

Figure 10 further shows the switching of the bidirectional switches to accommodate different directions of current flow in each of the plurality of electrical elements 46. More specifically, the bidirectional switches can be controlled in an energy storage device bypass mode so as to permit current flow to/from the third terminal 36 from/to the respective one of the first and second terminals 32,34, can be controlled in a voltage drop injection mode to switch to a first switched state to permit current flow to/from the third terminal 36 from/to the first terminal 32 and to block current flow between the second and third terminals 34,36, and can be controlled in a voltage drop injection mode to switch to a second switched state to permit current flow to/from the third terminal 36 to/from the second terminal 34 and to block current flow between the first and third terminals 32,36.

Figure 10 further shows an equivalent model that was created on the basis of the states of the current flow controller 30 shown in the same figure. In the equivalent model shown in Figure 10, the current flow controller 30 is represented by a first voltage source connected between the first DC power transmission line and the second grid node and by a second voltage source connected between the first and second DC power transmission lines. The first voltage source has a voltage level of $(1-D)\cdot\overline{E}$, while the second voltage source has a voltage level of $D\cdot\overline{E}$.

The current flow regulation operations of the current flow controller 30 described above with reference to Figures 5 and 6 applies mutatis mutandis to the current flow regulation operations of the current flow controller 30 configured in the manner set out in Figure 10. Hence a voltage drop, as provided by the energy storage device 42, can be injected into the second grid node or second DC power transmission line to enable modification of the current flows in the DC power grid 48 and thereby permit regulation of current flow in at least one of the electrical elements 46 to be carried out.

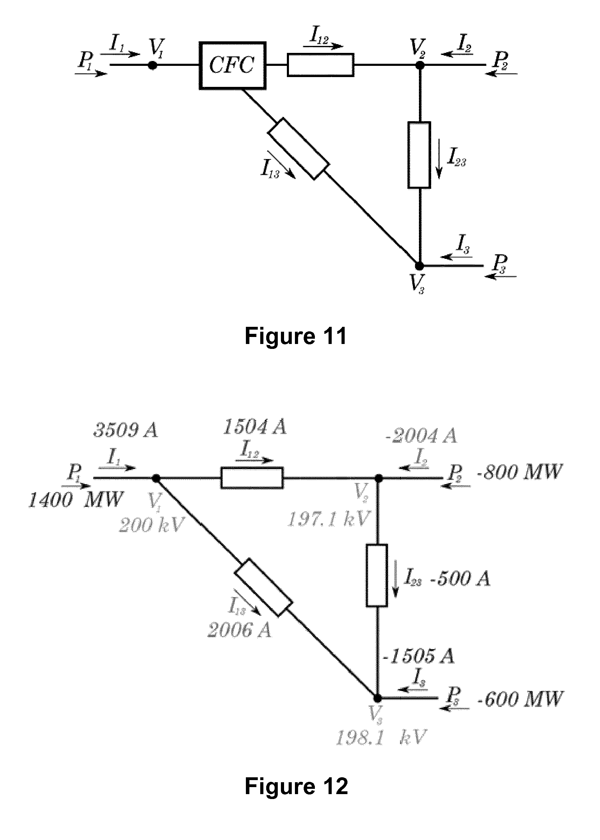

Further exemplary operations of the current flow controller 30 of Figure 1 is described as follows, with reference to Figures 11 to 21. More specifically, a first further exemplary operation of the current flow controller 30 will be described with reference to Figures 11 to 16, and a second further exemplary operation of the current flow controller 30 will be described with reference to Figures 11 and 17 to 21.

In each of the further exemplary operations, the current flow controller 30 is connected at the first grid node, as shown in Figure 11. More specifically, the first terminal 32 of the current flow controller 30 is connected to the first DC power transmission line, the second terminal 34 of the current flow controller 30 is connected to the third DC power transmission line, and the third terminal 36 of the current flow controller 30 is directly connected to the first grid node.

In the first further exemplary operation, the DC power grid 48 is configured as follows:

- grid voltage regulation is performed by the converter connected to the first grid node at 200 kV;
- the power $P_2$ leaving the DC power grid 48 at the second grid node is 800 MW;
- the power $P_3$ leaving the DC power grid 48 at the third grid node is 600 MW;
- the length of the first DC power transmission line is 200 km;
- the length of the second DC power transmission line is 200 km;
- the length of the third DC power transmission line is 100 km;
- the current rating of each DC power transmission line is 1800 A.

When the DC power grid 48 is in its steady state and the current flow controller 30 is operated in its energy storage device bypass mode, the power $P_1$ and steady state DC voltages $V_2,V_3$ and currents $I_1,I_2,I_3,I_{12},I_{23},I_{13}$ in the DC power grid 48 are shown in Figure 12 and are set out as follows:

- the power $P_1$ entering the DC power grid 48 at the first grid node is 1400 MW;
- the current flow $I_1$ from the corresponding converter into the DC power grid 48 at the first grid node is 3509 A;
- the current flow $I_{12}$ in the first DC power transmission line is 1504 A;
- the current flow $I_{23}$ in the second DC power transmission line is -500 A;
- the current flow $I_{13}$ in the third DC power transmission line is 2006 A;
- the voltage $V_2$ at the second grid node is 197.1 kV;
- the voltage $V_3$ at the third grid node is 198.1 kV;
- the current flow $I_2$ from the DC power grid 48 to the corresponding converter at the second grid node is 2004 A;
- the current flow $I_3$ from the DC power grid 48 to the corresponding converter at the third grid node is 1505 A.

It can be seen therefore that the current $I_{13}$ in the third DC power transmission line exceeds the current rating of 1800 A of the third DC power transmission line.

In order to prevent the current overload in the third DC power transmission line, the control objective of the current flow controller 30 is to balance the current flows $I_{12},I_{13}$ in the first and third DC power transmission lines. Such balancing of the current flows $I_{12},I_{13}$ in the first and third DC power transmission lines can be carried out by way of the current regulation operations of the current flow controller 30 described earlier in this specification.

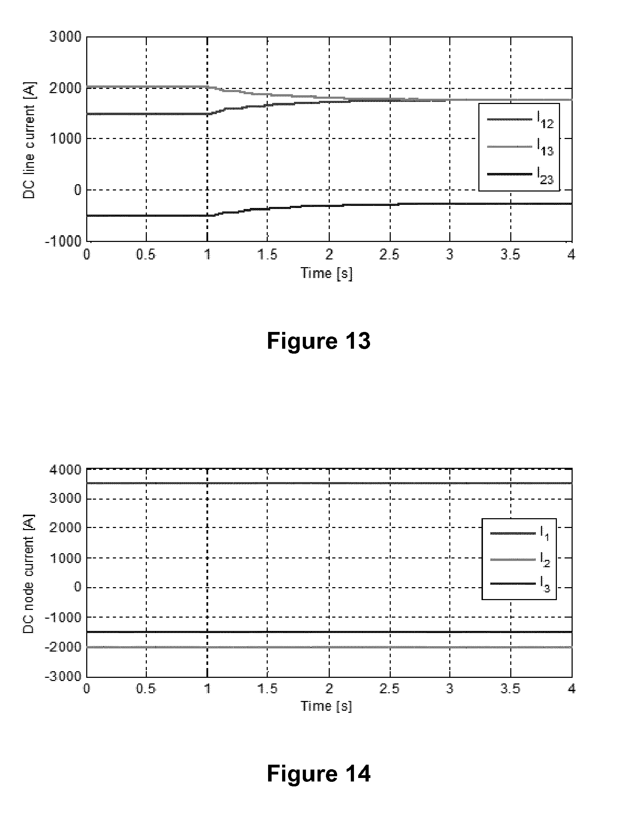

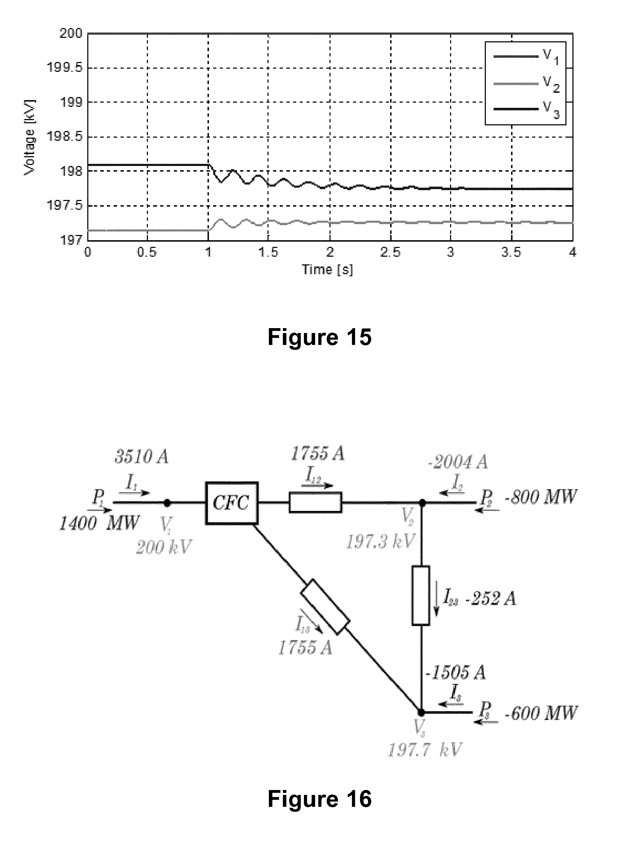

Figures 13 to 15 illustrates the operation of the current flow controller 30 in the voltage drop injection mode to balance the current flows $I_{12}$,$I_{13}$ in the first and third DC power transmission lines. It can be seen from Figure 13 that the current flow controller 30 in the voltage drop injection mode is capable of balancing the current flows $I_{12}$,$I_{13}$ in the first and third DC power transmission lines at time = 1 s in response to an order from the control unit 44, while it can be seen from Figure 14 that the currents $I_1$,$I_2$,$I_3$ flowing into or from the DC power grid 48 at the grid nodes remain unchanged by the operation of the current flow controller 30 from the energy storage device bypass mode to the voltage drop injection mode. As shown in Figure 15, the change in current flows $I_{12}$,$I_{23}$,$I_{13}$ in the DC power transmission lines results in a small change in voltage $V_2$,$V_3$ at each of the second and third grid nodes to 197.3 kV and 197.7 kV respectively.

Figure 16 shows the power $P_1$,$P_2$,$P_3$ and steady state currents $I_1$,$I_2$,$I_3$,$I_{12}$,$I_{23}$,$I_{13}$ in the DC power grid 48 when the current flow controller 30 is operated in the voltage drop injection mode. When the DC power grid 48 is in its steady state and the current flow controller 30 is operated in its voltage drop injection mode, the power $P_1$,$P_2$,$P_3$ and steady state currents $I_1$,$I_2$,$I_3$,$I_{12}$,$I_{23}$,$I_{13}$ in the DC power grid 48 are set out as follows:

- the power $P_1$ entering the DC power grid 48 at the first grid node is 1400 MW;
- the power $P_2$ leaving the DC power grid 48 at the second grid node is 800 MW;
- the power $P_3$ leaving the DC power grid 48 at the third grid node is 600 MW;
- the current flow $I_1$ from the corresponding converter into the DC power grid 48 at the first grid node is 3510 A;
- the current flow $I_{12}$ in the first DC power transmission line is 1755 A;
- the current flow $I_{23}$ in the second DC power transmission line is -252 A;
- the current flow $I_{13}$ in the third DC power transmission line is 1755 A;
- the current flow $I_2$ from the DC power grid 48 to the corresponding converter at the second grid node is 2004 A;
- the current flow $I_3$ from the DC power grid 48 to the corresponding converter at the third grid node is 1505 A.

It can be seen from Figure 16 that the operation of the current flow controller 30 in the voltage drop injection mode to balance the current flows $I_{12}$,$I_{13}$ in the first and third DC power transmission lines does not affect the power $P_1$,$P_2$,$P_3$ injected into or extracted from the DC power grid 48 by each converter connected to the respective grid node, and thereby does not affect the overall power transmission capability of the DC power grid 48.

In the second further exemplary operation, the DC power grid 48 is configured as follows:

- grid voltage regulation is performed by the converter connected to the first grid node at 200 kV;
- the power $P_2$ leaving the DC power grid 48 at the second grid node is 400 MW;
- the power $P_3$ leaving the DC power grid 48 at the third grid node is 300 MW;
- the length of the first DC power transmission line is 200 km;
- the length of the second DC power transmission line is 200 km;
- the length of the third DC power transmission line is 100 km.

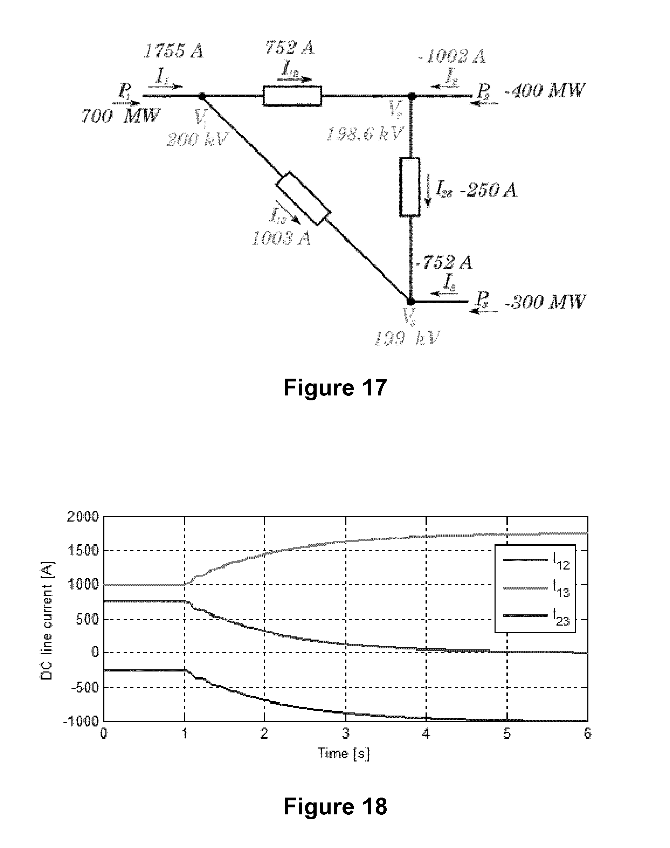

When the DC power grid 48 is in its steady state and the current flow controller 30 is operated in its energy storage device bypass mode, the power $P_1$ and steady state DC voltages $V_2$,$V_3$ and currents $I_1$,$I_2$,$I_3$,$I_{12}$,$I_{23}$,$I_{13}$ in the DC power grid 48 are shown in Figure 17 and are set out as follows:

- the power $P_1$ entering the DC power grid 48 at the first grid node is 700 MW;
- the current flow $I_1$ from the corresponding converter into the DC power grid 48 at the first grid node is 1755 A;
- the current flow $I_{12}$ in the first DC power transmission line is 752 A;
- the current flow $I_{23}$ in the second DC power transmission line is -250 A;
- the current flow $I_{13}$ in the third DC power transmission line is 1003 A;
- the voltage $V_2$ at the second grid node is 198.6 kV;
- the voltage $V_3$ at the third grid node is 199 kV;
- the current flow $I_2$ from the DC power grid 48 to the corresponding converter at the second grid node is 1002 A;
- the current flow $I_3$ from the DC power grid 48 to the corresponding converter at the third grid node is 752 A.

It may be required to disconnect the first DC power transmission line from the DC power grid 48, for example, to allow for its maintenance or to isolate a fault occuring in the first DC power transmission line.

In order to disconnect the first DC power transmisssion line from the DC power grid 48, the control objective of the current flow controller 30 is to reduce the current flow $I_{12}$ in the first DC power transmission line to zero. Such reduction of the current flow $I_{12}$ in the first DC power transmission line to zero can be carried out by way of the current regulation operations of the current flow controller 30 described earlier in this specification.

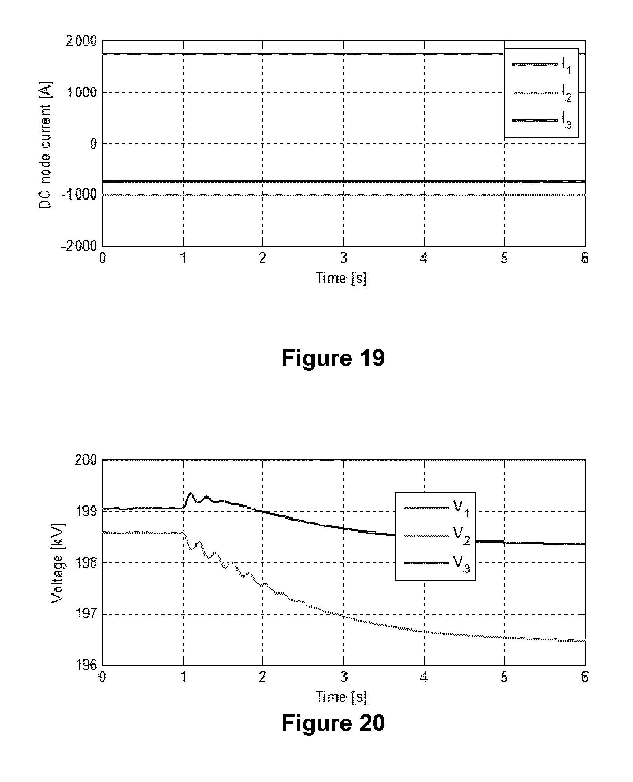

Figures 18 to 20 illustrate the operation of the current flow controller 30 in the voltage drop injection mode to reduce the current in the first DC power transmission line to zero. It can be seen from Figure 18 that the current flow controller 30 in the voltage drop injection mode is capable of reducing the current flow $I_{12}$ in the first DC power transmission line to zero, while it can be seen from Figure 19 that the currents $I_1,I_2,I_3$ flowing into or from the DC power grid 48 at the grid nodes remain unchanged by the operation of the current flow controller 30 from the energy storage device bypass mode to the voltage drop injection mode. As shown in Figure 20, the reduction of the current $I_{12}$ in the first DC power transmission line to zero results in a small change in voltage $V_2,V_3$ at each of the second and third grid nodes to 196.5 kV and 198.4 kV respectively.

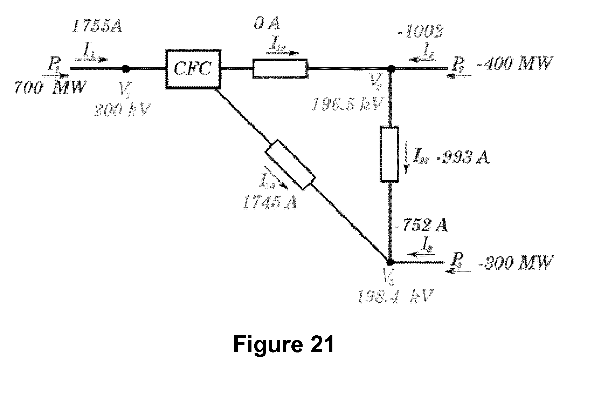

Figure 21 shows the power $P_1,P_2,P_3$ and steady state currents $I_1,I_2,I_3,I_{12},I_{23},I_{13}$ in the DC power grid 48 when the current flow controller 30 is operated in the voltage drop injection mode. When the DC power grid 48 is in its steady state and the current flow controller 30 is operated in its voltage drop injection mode, the power $P_1,P_2,P_3$ and steady state currents $I_1,I_2,I_3,I_{12},I_{23},I_{13}$ in the DC power grid 48 are set out as follows:

- the power $P_1$ entering the DC power grid 48 at the first grid node is 700 MW;
- the power $P_2$ leaving the DC power grid 48 at the second grid node is 400 MW;
- the power $P_3$ leaving the DC power grid 48 at the third grid node is 300 MW;
- the current flow $I_1$ from the corresponding converter into the DC power grid 48 at the first grid node is 1755 A;
- the current flow $I_{12}$ in the first DC power transmission line is 0 A;
- the current flow $I_{23}$ in the second DC power transmission line is -993 A;
- the current flow $I_{13}$ in the third DC power transmission line is 1745 A;
- the current flow $I_2$ from the DC power grid 48 to the corresponding converter at the second grid node is 1002 A;
- the current flow $I_3$ from the DC power grid 48 to the corresponding converter at the third grid node is -752 A.

It can be seen from Figure 21 that the operation of the current flow controller 30 in the voltage drop injection mode to reduce the current flow $I_{12}$ in the first DC power transmission line does not affect the power $P_1,P_2,P_3$ injected into or extracted from the DC power grid 48 by each converter connected to the respective grid node, and thereby does not affect the overall power transmission capability of the DC power grid 48. Optionally the current flow controller 30 may further include a current detector unit configured to detect a respective current direction in each of the electrical elements 46. This provides the current flow controller 30 with information on the current directions in the electrical elements 46 and thereby enables the control unit 44 to take into account such information when controlling the switching of each bidirectional switch 38,40 in the voltage drop injection mode.

It will be appreciated that the current flow controller 30 may be connected with respect to the first or third grid node in a similar manner to the connection of the current flow controller 30 described above with respect to the second grid node. The optimal location for the current flow controller 30 in the DC power grid 48 may vary depending on the characteristics of the DC power grid 48, and a power flow analysis of the DC power grid 48 could be performed to identify the optimal location for the current flow controller 30 so as to enhance its current flow regulation operations.

It will be further appreciated that the topology of the DC power grid 48 of Figure 3 was merely chosen to help illustrate the working of the current flow controller 30 according to the invention, and that the current flow controller 30 according to the invention is applicable to other DC power grid topologies and also to other types of electrical circuits.

**Claims**

1. A current flow controller comprising:

    first, second and third terminals being connectable, in use, to first, second and third electrical elements respectively, the third terminal being electrically connected to each of the first and second terminals;
    a bidirectional switch being operatively connected between the first and third terminals, the bidirectional switch being switchable to selectively permit and block current flow between the first and third terminals, the bidirectional switch including a pair of inverse-parallel connected first and second switching elements, each switching element being configured to have reverse voltage blocking capability;
    an energy storage device being fixedly connected between the first and second terminals to define a fixed current path between the first and second terminals, the energy storage device providing a voltage source; and
    a control unit configured to selectively control switching of the bidirectional switch in a voltage drop injection mode to block current flow in the bidirectional switch in order to inject a voltage drop, in use, into the first electrical element and thereby direct current through the fixed current path between the first and second terminals so as to carry out regulation of current flow in at least one of the electrical elements.

2. A current flow controller according to Claim 1 wherein the regulation of current flow in at least one of the electrical elements is selected from a group of functions including:

 • increasing or decreasing current flow in at least one of the electrical elements;
 • balancing the current flows in two or more of the electrical elements;
 • limiting a current flow in at least one of the electrical elements below a predefined current limit;
 • reducing current flow in at least one of the electrical elements to zero or substantially zero.

3. A current flow controller according to any preceding claim wherein the control unit is configured to selectively control switching of the bidirectional switch in an energy storage device bypass mode to permit current flow between the first and third terminals.

4. A current flow controller according to any preceding claim including first and second bidirectional switches, the first bidirectional switch being operatively connected between the first and third terminals, the second bidirectional switch being operatively connected between the second and third terminals, each bidirectional switch being switchable to selectively permit and block current flow between the third terminal and the corresponding one of the first and second terminals, each bidirectional switch including a pair of inverse-parallel connected first and second switching elements, each switching element being configured to have reverse voltage blocking capability,

 wherein the control unit is configured to selectively control switching of the bidirectional switches in the voltage drop injection mode to block current flow in one of the bidirectional switches and permit current flow in the other of the bidirectional switches in order to inject a voltage drop, in use, into one of the first and second electrical elements and thereby direct current through the fixed current path between the first and second terminals so as to carry out regulation of current flow in at least one of the electrical elements.

5. A current flow controller according to Claim 4 wherein the control unit is configured to selectively control switching of the bidirectional switches in the voltage drop injection mode to alternate between first and second switched states of the bidirectional switches in order to alternately inject a voltage drop, in use, into each of the first and second electrical elements and thereby direct current through the fixed current path between the first and second terminals so as to carry out regulation of current flow in at least one of the electrical elements,

wherein, in the first switched state of the bidirectional switches, the first bidirectional switch permits current flow between the third terminal and the first terminal, and the second bidirectional switch blocks current flow between the third terminal and the second terminal, and

wherein, in the second switched state of the bidirectional switches, the first bidirectional switch blocks current flow between the third terminal and the first terminal, and the second bidirectional switch permits current flow between the third terminal and the second terminal.

6. A current flow controller according to Claim 4 or Claim 5 wherein the control unit is configured to selectively control switching of the bidirectional switches in an energy storage device bypass mode to permit current flow between the third terminal and each of the first and second terminals.

7. A current flow controller according to any preceding claim wherein each switching element includes:

 • an active switching device connected in series with a passive current check element;
 • a thyristor.

8. A current flow controller according to any preceding claim further including a current detector unit configured to detect a respective current direction in each of the electrical elements.

9. A current flow control circuit comprising:

 first, second and third electrical elements; and
 a current flow controller according to any preceding claim;
 wherein the first, second and third electrical elements are respectively connected to the first, second and third terminals of the current flow controller.

**Figure 1**

**Figure 2**

**Figure 3**

**Figure 4**

**Figure 5**

**Figure 6**

**Figure 7**

**Figure 8**

Figure 9

**Figure 10**

**Figure 11**

**Figure 12**

**Figure 13**

**Figure 14**

**Figure 15**

**Figure 16**

**Figure 17**

**Figure 18**

**Figure 19**

**Figure 20**

**Figure 21**

Europäisches
Patentamt

European
Patent Office

Office européen
des brevets

**EUROPEAN SEARCH REPORT**

Application Number

EP 14 38 2388

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 670 013 A1 (ALSTOM TECHNOLOGY LTD [CH]) 4 December 2013 (2013-12-04) * paragraph [0086] - paragraph [0095]; figure 6 * * paragraph [0001] * * paragraph [0014] * * paragraph [0024] * ----- | 1-9 | INV. H02J3/36 |

TECHNICAL FIELDS
SEARCHED      (IPC)

H02J

The present search report has been drawn up for all claims

| Place of search | Date of completion of the search | Examiner |
|---|---|---|
| Munich | 26 March 2015 | Martin, Raynald |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 14 38 2388

This annex lists the patent family members relating to the patent documents cited in  the above-mentioned European search report.
The members are as contained in the European Patent Office EDP file on
The European Patent Office is in no way liable for these particulars which are merely given for the purpose of information.

26-03-2015

| Patent document cited in search report | | Publication date | Patent family member(s) | | Publication date |
|---|---|---|---|---|---|
| EP 2670013 | A1 | 04-12-2013 | CA | 2874697 A1 | 05-12-2013 |
| | | | EP | 2670013 A1 | 04-12-2013 |
| | | | EP | 2856601 A1 | 08-04-2015 |
| | | | WO | 2013178807 A1 | 05-12-2013 |

EPO FORM P0459

For more details about this annex : see Official Journal of the European Patent Office, No. 12/82